# EUROPEAN PATENT APPLICATION

(11) **EP 4 566 884 A1**
(43) Date of publication of application: **11.06.2025**
(21) Application number: 23850175.3
(22) Date of filing: 04.08.2023
(51) Int. Cl.: B60Q 1/48, B60Q 1/00, F21V 7/00, F21V 9/40, F21W 103/00, F21W 103/20, F21W 103/35, F21W 103/45, F21W 103/60, F21Y 115/10, F21Y 115/30

(54) **ROAD SURFACE DRAWING DEVICE FOR VEHICLE AND ROAD SURFACE DRAWING METHOD FOR VEHICLE**

(30) Priority: 05.08.2022 JP 2022125734; 26.08.2022 JP 2022135265
(71) Applicant: Koito Manufacturing Co., Ltd., Tokyo 141-0001 (JP)
(72) Inventor: WATANO Yuichi, Shizuoka-shi, Shizuoka 424-8764 (JP); TOTSUKA Takahiro, Shizuoka-shi, Shizuoka 424-8764 (JP); MARUYAMA Yuta, Shizuoka-shi, Shizuoka 424-8764 (JP); NAGAI Hikaru, Shizuoka-shi, Shizuoka 424-8764 (JP); NAKAMURA Saki, Shizuoka-shi, Shizuoka 424-8764 (JP); TANABE Koichi, Shizuoka-shi, Shizuoka 424-8764 (JP)
(74) Representative: Hoffmann Eitle
(86) International application number: PCT/JP2023/028574
(87) International publication number: WO 2024/029622

(57) **Abstract**

This road surface drawing device (10) for a vehicle projects an image based on a drawing pattern (P1) on a road surface. The road surface drawing device comprises: a road surface drawing unit (11) that irradiates a road surface (RS) with light (L1, L2, L3) to project an image (DSP) thereon; a control unit (12) that controls the projection of the image (DSP) by the road surface drawing unit (11); and an operation state acquisition unit (140) that acquires an operation state of the vehicle (100). Upon determining that the operation state is reverse operation, the control unit (12) controls the road surface drawing unit (11) in a reverse mode. Upon determining that the operation state is not reverse operation, the control unit (12) turns off the road surface drawing unit (11).

## Description

### TECHNICAL FIELD

The present disclosure relates to a road surface drawing device for a vehicle and a road surface drawing method for a vehicle.

### BACKGROUND ART

In recent years, a vehicle lamp capable of projecting an image indicating necessary information onto a road surface has been developed for the purpose of improving the safety of an own vehicle or another vehicle, improving communication between a driver and a pedestrian, or the like. Patent Literature 1 discloses a road surface drawing device for a vehicle that calculates a braking distance according to a vehicle speed and draws an image on a road surface within a braking distance range. Patent Literature 1 discloses that the road surface drawing device draws a road surface marking on the road surface of a traveling lane ahead of the vehicle, extending from the vehicle to a possible stopping position a distance ahead of a braking distance of the vehicle, and operates to make the driver aware of the risk of collision with obstacles on the road such as a vehicle ahead or pedestrians present ahead of the possible stopping position.

Further, in recent years, a back monitor in which an imaging device is disposed at the rear of a vehicle, a rear image is captured during reverse operation or parking operation of the vehicle, and the rear image is displayed on a display device provided in a vehicle interior has become widespread. It is also proposed to provide a road surface drawing device for a vehicle at the rear of the vehicle to draw an image indicating a direction of travel or a vehicle width on road surface behind the vehicle in reverse operation or parking operation, and to assist the reverse operation or the parking operation.

### CITATION LIST

### PATENT LITERATURE

Patent Literature 1: JP2015-164828A

### SUMMARY OF INVENTION

### TECHNICAL PROBLEM

Generally, in the reverse operation or the parking operation, marks, roadway outside lines, or the like indicating a parking space are often drawn on the road surface behind the vehicle, and there is a possibility that these marks and lines may overlap the image drawn by the road surface drawing device for a vehicle. In the drawing of the image facing the front of the vehicle, since the driver can view the road surface directly, it is easy to distinguish between the projected image and the marks and the lines drawn on the road surface. However, when the rear image captured by the imaging device is displayed on the display device, the drawn image may be confused with the marks and the lines, which may hinder the reverse operation.

Further, an object of the road surface drawing device for a vehicle according to Patent Literature 1 is to make the driver aware of the danger posed by the obstacles, but the recognition of the obstacles is entirely dependent on visual inspection of the driver. Accordingly, it is considered that if a road surface drawing device for a vehicle capable of not only projecting the image on the road surface but also recognizing the obstacles and warning the driver, or the like can be implemented, it would contribute further to improvement of safety.

A first object of the present disclosure is to provide a road surface drawing device for a vehicle and a road surface drawing method for a vehicle capable of preventing confusion between a projected image and a mark and a line on a road surface even when the image is projected onto an area behind the vehicle in reverse operation or parking operation.

A second object of the present disclosure is to provide a road surface drawing device for a vehicle and a road surface drawing method for a vehicle capable of quickly warning a driver of the presence of an approaching obstacle in a moving process of a vehicle.

### SOLUTION TO PROBLEM

In order to achieve the above first object, a road surface drawing device for a vehicle of the present disclosure is a road surface drawing device for a vehicle and for projecting an image based on a drawing pattern onto a road surface and includes a road surface drawing unit configured to irradiate the road surface with light to project the image on the road surface; a controller configured to control the projection of the image by the road surface drawing unit; and an operation state acquisition unit configured to acquire an operation state of a vehicle. The controller controls the road surface drawing unit in a reverse mode in response to determining that the operation state is reverse operation, and turns off the road surface drawing unit in response to determining that the operation state is not the reverse operation.

In the road surface drawing device for a vehicle according to the present disclosure, since the controller controls the road surface drawing unit in the reverse mode in response to determining that the operation state is the reverse operation, and turns off the road surface drawing unit in response to determining that the operation state is not the reverse operation, even if the image is projected onto an area behind the vehicle during the reverse operation or the parking operation, it is possible to prevent confusion between the projected image and a mark and a line on the road surface.

In order to achieve the above first object, a road surface drawing method for a vehicle of the present disclosure is a road surface drawing method for a vehicle and for projecting an image based on a drawing pattern onto a road surface and includes a road surface drawing step of irradiating the road surface with light to project the image on the road surface; and an operation state acquisition step of acquiring an operation state of a vehicle. Control is performed in a reverse mode in response to determining that the operation state is reverse operation, and the image is turned off in response to determining that the operation state is not the reverse operation.

In order to achieve the above second object, a road surface drawing device for a vehicle of the present disclosure is a road surface drawing device for a vehicle and for projecting an image based on a drawing pattern onto a road surface and includes a road surface drawing unit configured to turn on the drawing pattern; an imaging unit configured to capture a projection drawing pattern projected onto the road surface; a comparison unit configured to compare the projection drawing pattern with a basic drawing pattern; and a controller configured to, in a case where there is a difference between the projection drawing pattern and the basic drawing pattern, change a lighting state of the road surface drawing unit.

The road surface drawing device for a vehicle according to the present disclosure includes the road surface drawing unit configured to turn on the drawing pattern, and the imaging unit configured to capture a projection drawing pattern projected onto the road surface. The projection drawing pattern is compared with the basic drawing pattern, and when there is a difference between the projection drawing pattern and the basic drawing pattern, the controller changes the lighting state of the road surface drawing unit. Accordingly, it is possible to quickly warn the driver of the presence of the approaching obstacle in the moving process of the vehicle.

In order to achieve the above second object, a road surface drawing method for a vehicle of the present disclosure is a road surface drawing method for a vehicle and for projecting an image based on a drawing pattern onto a road surface by a road surface drawing unit and includes a road surface drawing step of turning on the drawing pattern; an imaging step of capturing a projection drawing pattern projected onto the road surface; a comparison step of comparing the projection drawing pattern with a basic drawing pattern; and a lighting state changing step of changing a lighting state of the road surface drawing unit in a case where there is a difference between the projection drawing pattern and the basic drawing pattern.

### ADVANTAGEOUS EFFECTS OF INVENTION

In the present disclosure, it is possible to provide the road surface drawing device for a vehicle and the road surface drawing method for a vehicle capable of preventing confusion between the projected image and the mark and the line on the road surface even when the image is projected onto an area behind the vehicle in the reverse operation or the parking operation.

Further, in the present disclosure, it is possible to provide the road surface drawing device for a vehicle and the road surface drawing method for a vehicle capable of quickly warning the driver of the presence of the approaching obstacle in the moving process of the vehicle.

### BRIEF DESCRIPTION OF DRAWINGS

[FIG. 1] FIG. 1 is a schematic plan view illustrating an example of an arrangement of a road surface drawing device for a vehicle according to a first embodiment.
[FIG. 2A] FIG. 2A is a schematic plan view illustrating drawing patterns by the road surface drawing device for a vehicle.
[FIG. 2B] FIG. 2B is a schematic diagram illustrating an example of a captured image by a camera in the road surface drawing device for a vehicle.
[FIG. 3] FIG. 3 is a block diagram illustrating a configuration of the road surface drawing device for a vehicle according to the first embodiment.
[FIG. 4] FIG. 4 is a schematic cross-sectional view illustrating a configuration of a road surface drawing unit according to the first embodiment.
[FIG. 5] FIG. 5 is a flowchart illustrating a processing flow of a road surface drawing method for a vehicle according to the first embodiment.
[FIG. 6A] FIG. 6A is a schematic plan view illustrating a drawing at a parking operation start time of a vehicle in the road surface drawing method for a vehicle according to the first embodiment.
[FIG. 6B] FIG. 6B is a schematic plan view illustrating a drawing during parking operation of the vehicle in the road surface drawing method for a vehicle according to the first embodiment.
[FIG. 6C] FIG. 6C is a schematic plan view illustrating a drawing at a parking operation end time of the vehicle in the road surface drawing method for a vehicle according to the first embodiment.
[FIG. 7A] FIG. 7A is a schematic plan view illustrating a drawing at the start of a parking operation of a vehicle in a road surface drawing method for a vehicle according to a second embodiment.
[FIG. 7B] FIG. 7B is a schematic plan view illustrating a drawing during the parking operation of the vehicle in the road surface drawing method for a vehicle according to the second embodiment.
[FIG. 7C] FIG. 7C is a schematic plan view illustrating a drawing at the end of the parking operation of the vehicle in the road surface drawing method for a vehicle according to the second embodiment.
[FIG. 8A] FIG. 8A is a schematic plan view illustrating a drawing at a parking operation start time of a vehicle in a road surface drawing method for a vehicle according to a third embodiment.
[FIG. 8B] FIG. 8B is a schematic plan view illustrating a drawing of a first stage in a parking state of the vehicle in the road surface drawing method for a vehicle according to the third embodiment.
[FIG. 8C] FIG. 8C is a schematic plan view illustrating a drawing of a second stage in the parking state of the vehicle in the road surface drawing method for a vehicle according to the third embodiment.
[FIG. 9A] FIG. 9A is a schematic plan view illustrating a drawing of a normal state in a vehicle parking operation in a road surface drawing method for a vehicle according to a fourth embodiment.
[FIG. 9B] FIG. 9B is a schematic plan view illustrating a drawing of a first stage of a parking state in the vehicle parking operation in the road surface drawing method for a vehicle according to the fourth embodiment.
[FIG. 9C] FIG. 9C is a schematic plan view illustrating a drawing of a second stage of the parking state in the vehicle parking operation in the road surface drawing method for a vehicle according to the fourth embodiment.
[FIG. 10A] FIG. 10A is a top view illustrating an arrangement of a road surface drawing device for a vehicle according to a seventh embodiment.
[FIG. 10B] FIG. 10B is a back view illustrating the arrangement of the road surface drawing device for a vehicle according to the seventh embodiment.
[FIG. 11A] FIG. 11A is a top view illustrating drawing patterns by the road surface drawing device for a vehicle according to the seventh embodiment.
[FIG. 11B] FIG. 11B is a schematic diagram illustrating an imaging screen by a camera of the road surface drawing device for a vehicle according to the seventh embodiment.
[FIG. 12] FIG. 12 is a block diagram illustrating a configuration of the road surface drawing device for a vehicle according to the seventh embodiment.
[FIG. 13] FIG. 13 is a cross-sectional view illustrating a configuration of a road surface drawing unit according to the seventh embodiment.
[FIG. 14] FIG. 14 is a flowchart illustrating a flow of road surface drawing processing executed by the road surface drawing device for a vehicle according to the seventh embodiment.
[FIG. 15] FIG. 15 is a diagram illustrating mismatch control of the road surface drawing processing executed by the road surface drawing device for a vehicle according to the seventh embodiment.
[FIG. 16A] FIG. 16A is a top view illustrating an operation of the road surface drawing device for a vehicle according to the seventh embodiment when a vehicle is parked.
[FIG. 16B] FIG. 16B is a top view illustrating the operation of the road surface drawing device for a vehicle according to the seventh embodiment when the vehicle is parked.
[FIG. 16C] FIG. 16C is a top view illustrating the operation of the road surface drawing device for a vehicle according to the seventh embodiment when the vehicle is parked.
[FIG. 17A] FIG. 17A is a top view illustrating determination of a foreign object in a road surface drawing device for a vehicle according to an eighth embodiment.
[FIG. 17B] FIG. 17B is a schematic diagram illustrating an imaging screen by a camera of the road surface drawing device for a vehicle according to the eighth embodiment.

### DESCRIPTION OF EMBODIMENTS

### (First Embodiment)

Hereinafter, embodiments of the present disclosure will be described in detail with reference to the drawings. The same or equivalent components, members, and processing illustrated in the drawings are denoted by the same reference signs, and redundant description thereof will be omitted as appropriate.

In the description of the present embodiment, a "left-right direction", a "front-rear direction", and an "up-down direction" may be appropriately referred to for convenience of description. The "up-down direction" is a direction including an "up direction" and a "down direction". The "front-rear direction" is a direction including a "front direction" and a "rear direction". The "left-right direction" is a direction including a "left direction" and a "right direction". A reference numeral U illustrated in the drawings to be described later indicates an up direction. A reference numeral D indicates a down direction. A reference numeral F indicates a front direction. A reference numeral B indicates a rear direction. A reference numeral L indicates a left direction. A reference numeral R indicates a right direction. These directions correspond to the directions seen from a driver in a vehicle.

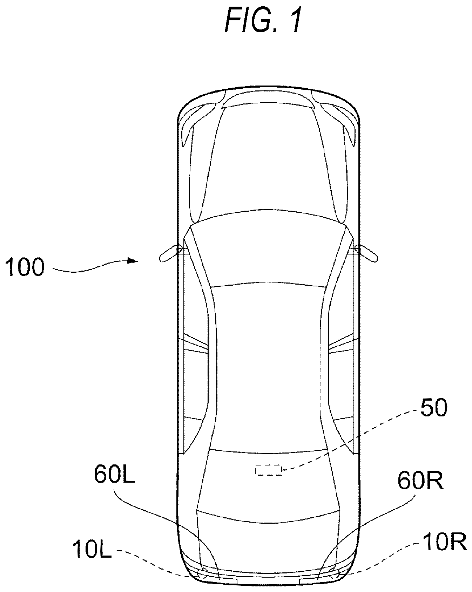

FIG. 1 is a schematic plan view illustrating an example of an arrangement of a road surface drawing device for a vehicle 10 according to a first embodiment. In a vehicle 100, reversing lamps (backup lamps) 60R and 60L, a camera 50 (imaging unit) constituting a part of road surface drawing devices for a vehicle 10R and 10L, and a monitor (not illustrated) are disposed. The road surface drawing devices for a vehicle 10R and 10L are disposed in the right and left reversing lamps 60R and 60L of the vehicle 100, respectively. In the present embodiment, the road surface drawing devices for a vehicle 10R and 10L are disposed in the reversing lamps 60R and 60L of the vehicle, but the positions where they are placed are not limited. For example, the road surface drawing devices for a vehicle 10R and 10L may be disposed in another vehicle lamp or may be disposed independently. Hereinafter, when the left and right distinction is not made, the reversing lamps 60L and 60R are referred to as reversing lamps 60, and road surface drawing units 11L and 11R are collectively referred to as a road surface drawing unit 11.

The camera 50 is an imaging device configured to capture an image of an area behind the vehicle 100. As an example, the camera 50 is disposed at an upper back surface of the vehicle 100, more specifically, at an upper portion of a rear window. The monitor is, for example, a display device of a liquid crystal screen for displaying an image captured by the camera 50. The monitor is disposed, for example, at a position visually recognizable by the driver in the vicinity of a driver's seat. The road surface drawing device for a vehicle 10 further includes a controller 12, and details of the controller 12 will be described later.

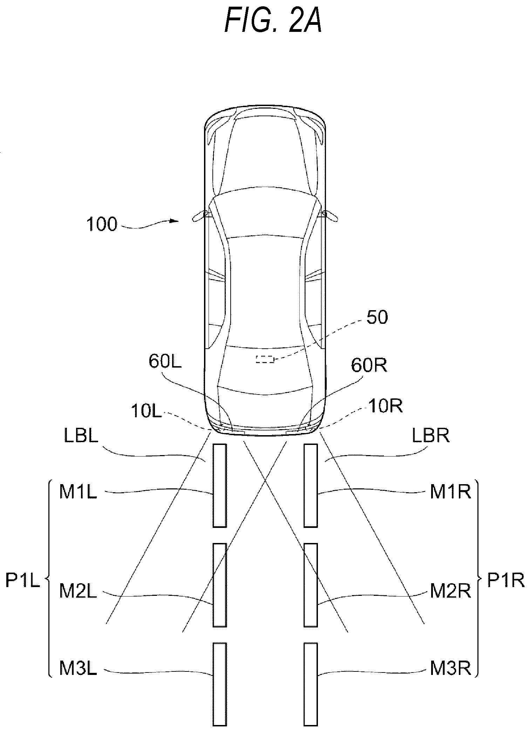

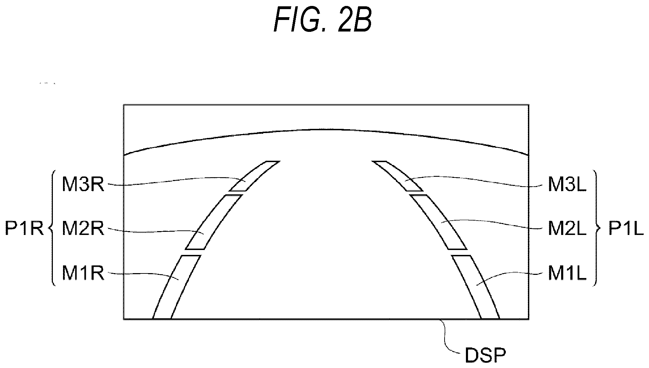

Drawing patterns that are projected onto a road surface by the road surface drawing device for a vehicle 10 according to the present embodiment will be described with reference to FIGS. 2A and 2B. FIG. 2A is a schematic plan view illustrating the drawing patterns by the road surface drawing device for a vehicle 10. FIG. 2B is a schematic diagram illustrating an example of a captured image by the camera 50 in the road surface drawing device for a vehicle 10. As illustrated in FIG. 2A, the road surface drawing device for a vehicle 10 projects, onto the road surface behind the vehicle 100, a drawing pattern P1L on a left side by the road surface drawing unit 11L and a drawing pattern P1R on a right side by the road surface drawing unit 11R. Hereinafter, when the drawing patterns P1L and P1R are not distinguished from each other in the left and right directions, they are referred to as the "drawing patterns P1".

The drawing pattern P1L includes marks M1L, M2L, and M3L each having a substantially rectangular shape. The drawing pattern P1R includes substantially rectangular marks M1R, M2R, and M3R. As will be described later, the marks M1L, M2L, and M3L and the marks M1R, M2R, and M3R are formed by corresponding light sources. In the present embodiment, a form in which each of the drawing patterns P1L and P1R is formed by three marks is exemplified, but each of the drawing patterns P1L and P1R may be formed by two marks or less, or by four marks or more. Further, in the present embodiment, a form in which the drawing pattern P1 is formed such that a gap is provided between adjacent marks is exemplified, but the marks may be overlapped to form a single line. For confirmation, a light distribution pattern LBL on a left side of the left reversing lamp 60L and a light distribution pattern LBR on a right side of the right reversing lamp 60R are also illustrated together in FIG. 2A.

FIG. 2B illustrates an image DSP captured by the camera 50 and displayed on the monitor. As illustrated in FIG. 2B, the drawing patterns P1R and P1L projected onto a road surface RS behind the vehicle 100 is displayed on the monitor and is visually recognizable by the driver.

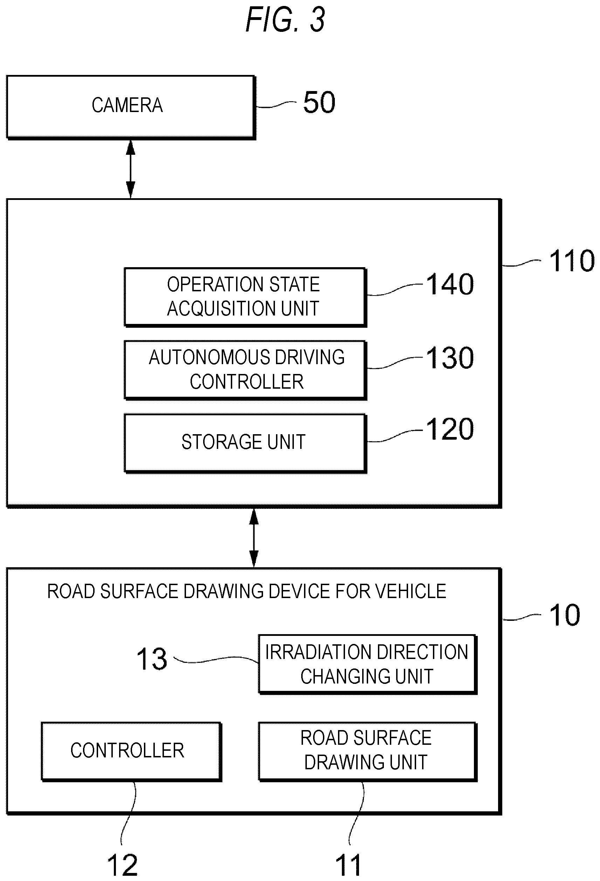

An example of a configuration of the road surface drawing device for a vehicle 10 will be described with reference to FIG. 3. FIG. 3 is a block diagram illustrating the configuration of the road surface drawing device for a vehicle 10 according to the present embodiment. As illustrated in FIG. 3, the road surface drawing device for a vehicle 10 includes the road surface drawing unit 11, the controller 12, and an irradiation direction changing unit 13. The road surface drawing device for a vehicle 10 and the camera 50 are connected to an electronic control unit (ECU) 110. An image captured by the camera 50 is taken into the ECU 110 and then sent to the road surface drawing device for a vehicle 10. Further, the image captured by the camera 50 is displayed on the monitor by the ECU 110.

The ECU 110 is a control device configured to electronically control each part of the vehicle 100 and transmit information of each part. As illustrated in FIG. 3, the ECU 110 includes a storage unit 120, an autonomous driving controller 130, and an operation state acquisition unit 140. Illustration of the other configuration (for example, the reversing lamps 60) of the vehicle 100 connected to the ECU 110 is omitted. The storage unit 120 is a unit configured to store data or the like handled by the camera 50, the ECU 110, and the road surface drawing device for a vehicle 10. The autonomous driving controller 130 is a unit that controls each portion of the vehicle 100 to operate the vehicle 100 autonomously or through driving assistance, and can use known autonomous driving technologies. The operation state acquisition unit 140 is a unit that acquires an operation state of the vehicle 100, and acquires, for example, information such as a position, a vehicle speed, a rotation speed of a wheel, a rotation speed of an engine, a rotation speed of a motor, a state of a transmission, a state of a steering device, an inclination of a vehicle body, acceleration applied to the vehicle body, or the like.

The road surface drawing unit 11 include light sources and an optical system (such as a lens) as will be described later. The road surface drawing unit 11 is configured to project the drawing patterns (M1L, M2L, M3L, M1R, M2R, M3R, or the like) onto the road surface RS behind the vehicle 100. The specific configuration of the road surface drawing unit 11 is not limited. For example, the road surface drawing unit 11 may include a plurality of light sources and may be configured to individually control emission of light, and the road surface drawing unit 11 may be configured to reflect the illumination light of a semiconductor laser or the like using micro electro mechanical systems (MEMS) or the like. Alternatively, the road surface drawing unit 11 may be configured to draw a predetermined image on the road surface using a liquid crystal display device, an organic EL display device, or the like.

The controller 12 is configured to control the road surface drawing unit 11 in cooperation with the ECU 110. The controller 12 is, for example, a microcomputer including a central processing unit (CPU), a read only memory (ROM), and a random access memory (RAM) (not illustrated). The controller 12 is configured to control the road surface drawing device for a vehicle 10 by executing a road surface drawing method for a vehicle to be described later as a result of the CPU executing a program recorded in the ROM or RAM.

The irradiation direction changing unit 13 is a unit configured to change an irradiation direction of light emitted from the road surface drawing unit 11. The specific structure of the irradiation direction changing unit 13 is not limited. For example, the irradiation direction changing unit 13 may be configured to change the direction of the road surface drawing unit 11 using a swivel actuator. Further, the irradiation direction changing unit 13 may use an optical member such as a lens or a reflecting mirror to change the irradiation direction of the light emitted from the road surface drawing unit 11 by changing the direction of the optical member. The irradiation direction changing unit 13 may be configured to simply emit light to any range within a range in which the road surface drawing unit 11 can emit light.

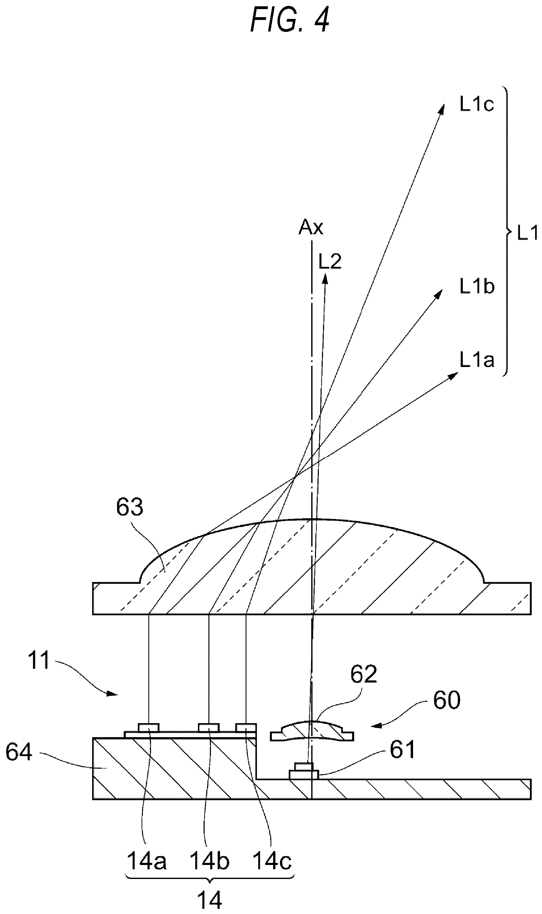

An example of the road surface drawing unit 11 will be described with reference to FIG. 4. FIG. 4 is a schematic cross-sectional view illustrating the configuration of the road surface drawing unit 11 according to the present embodiment. As described above, the road surface drawing unit 11 according to the present embodiment is configured integrally with the reversing lamp 60. Since the road surface drawing units 11L and 11R have the same configuration, they will not be distinguished from each other below. As illustrated in FIG. 4, the road surface drawing unit 11 includes light sources 14a, 14b, and 14c mounted on a substrate 64 and a projection lens 63. The light sources 14a, 14b, and 14c are arranged side by side along a height direction (left-right direction in FIG. 4) of the vehicle. Hereinafter, the light sources 14a, 14b, and 14c are collectively referred to as "light sources 14". The light sources 14 are light-emitting elements configured to emit light when energized, and a white LED is used as the light-emitting element as an example. However, the present invention is not limited thereto, and a laser light-emitting element or the like may be used. In the present embodiment, a mode in which the three light sources 14a, 14b, and 14c are disposed is described as an example, but a required number of light sources 14 corresponding to the number of marks (M1R, M1L, or the like) may be disposed.

The projection lens 63 is, for example, a lens in which at least one of an entrance surface and a reflection surface is aspheric, and is configured to convert light emitted from the light sources 14a, 14b, and 14c into light L1a, L1b, and L1c that project the respective marks. Since the light sources 14a, 14b, and 14c are all disposed above the optical axis Ax (+Z direction), the light L1a, L1b, and L1c emitted from the projection lens 63 are emitted downward from the projection lens 63 in a horizontal direction, and are projected onto the road surface RS behind the vehicle 100. That is, the light L1a draws the mark M1L (M1R), the light L1b draws the mark M2L (M2R), and the light L1c draws the mark M3L (M3R). The light L1a, L1b, and L1c are collectively referred to as drawing light L1.

The reversing lamp 60 includes a lamp light source 61 mounted on the substrate 64, a diffusion lens 62, and a projection lens 63. That is, the projection lens 63 is shared with the road surface drawing unit 11. The lamp light source 61 is a light source configured to generate light for a reversing lamp. The lamp light source 61 is a light-emitting element configured to emit light when energized, and for example, a white LED is used as the light-emitting element. The diffusion lens 62 is a substantially rectangular small diffusion lens having a back surface as an incident surface and a front surface as an emission surface, and forms the light distribution patterns LBL and LBR of the reversing lamps 60. The light emitted from the diffusion lens 62 passes through the projection lens 63 and becomes lamp light L2 for forming the light distribution patterns LBL and LBR of the reversing lamps 60.

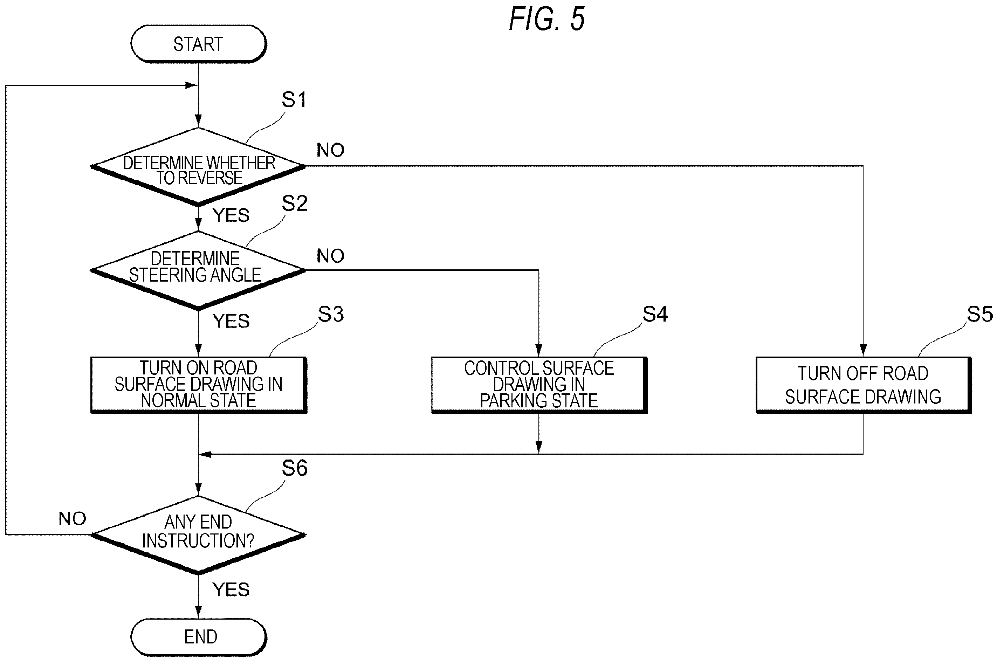

FIG. 5 is a flowchart illustrating a processing flow of the road surface drawing method for a vehicle according to the present embodiment. In the following description, it is assumed that an instruction to start execution of the program for controlling the road surface drawing device for a vehicle has already been given to the road surface drawing device for a vehicle 10. Further, the ECU 110 is configured to acquire a rear image from the camera 50, send the rear image to the controller 12 at an appropriate timing, and display the rear image on the monitor to present the rear image to the driver.

Step S1 is an operation state acquisition step, and the controller 12 acquires the operation state of the vehicle 100 using the operation state acquisition unit 140. In the operation state acquisition step, the controller 12 determines whether the vehicle 100 is in reverse operation, based on the acquired operation state. If it is determined that the vehicle is in the reverse operation, the process proceeds to step S2, and if it is determined that the reverse operation is not performed, the process proceeds to step S5. Here, an example in which it is determined that the operation state is the reverse operation includes a case where the transmission is shifted to reverse, a case where the autonomous driving controller 130 selects the reverse operation, a case where a switch for instructing the reverse operation provided in the vehicle 100 is in an ON state, or the like.

Steps S2 to S4 are a control mode executed in response to determining that the operation state acquired in the operation state acquisition step is the reverse operation, and this mode corresponds to a reverse mode in the present disclosure. Since the road surface drawing unit 11 irradiates the road surface with light to project an image thereon in steps S3 and S4, these steps correspond to a road surface drawing step in the present disclosure.

Step S2 is a reverse mode determination step, in which it is further determined whether the vehicle is in a normal state, which is a normal reverse operation, or a parking state, which is reverse operation during parking, in the reverse mode. If it is determined that the vehicle is in the normal state, the step proceeds to step S3, and if it is determined that the vehicle is in the parking state, the process proceeds to step S4.

In the example illustrated in FIG. 5, in the reverse mode determination step, the controller 12 acquires a brake state and a steering angle of the steering device from the operation state acquisition unit 140 as the operation state of the vehicle 100. If the brake state is released and the steering angle is equal to or smaller than a predetermined angle, the controller 12 determines that the vehicle is in the normal state, and if the steering angle is greater than the predetermined angle, the controller 12 determines that the vehicle is in the parking state. Here, an example in which the controller 12 determines the normal state and the parking state based on the steering angle as the reverse mode determination step is illustrated, but the controller 12 may determine that the vehicle is in the parking state when the autonomous driving controller 130 is performing autonomous parking driving. Further, a switch for inputting a parking operation may be provided in the vehicle 100, and the controller 12 may determine that the vehicle is in the parking state when the switch is in an ON state. Here, the steering angle for determining that the vehicle is in the parking state is, for example, 5 degrees or more.

Step S3 is a normal drawing step in the road surface drawing step, in which the road surface drawing unit 11 draws an image on the road surface in the normal state. Here, the drawing of the image in the normal state is to project the illumination light with a predetermined light amount and an irradiation range onto the road surface. One example of the projection of the image in the normal state is to continuously turn on all of the marks M1L, M2L, M3L, M1R, M2R, and M3R illustrated in FIGS. 2A and 2B with the maximum light quantity. After the normal drawing step is performed, the process proceeds to step S5.

Step S4 is a during-parking drawing step in the road surface drawing step, in which the road surface drawing unit 11 draws an image on the road surface in the parking state which is different from the normal state in the normal drawing step. Here, the drawing of the image in the parking state means that the light amount, the irradiation range, the duration of the light irradiation, the direction of the light irradiation, and the like are different from those in the normal state. After the during-parking drawing step is executed, the process proceeds to step S5.

Step S5 is a drawing turning-off step, in which the controller 12 turns off the road surface drawing unit 11 and stops drawing the image on the road surface behind the vehicle. At this time, the road surface drawing unit 11 may be turned off by instantaneously setting the light amount for drawing the image to zero instantaneously, or by decreasing the light amount stepwise or gradually to zero. When the drawing turning-off step ends, the process proceeds to step S6.

Step S6 is an end instruction determination step in which it is determined whether an instruction to end the road surface drawing method for a vehicle is given. If there is no instruction to end the road surface drawing method for a vehicle, the process returns to step S1 and the control continues, and if there is an instruction to end the road surface drawing method for a vehicle, the road surface drawing unit 11 is turned off and the control is stopped. Here, the instruction to end the road surface drawing method for a vehicle includes a case where the road surface drawing switch provided in the vehicle 100 is turned off, a case where the autonomous driving controller 130 sends a road surface drawing stop signal, a case where a starting portion of the vehicle 100 is turned off, or the like.

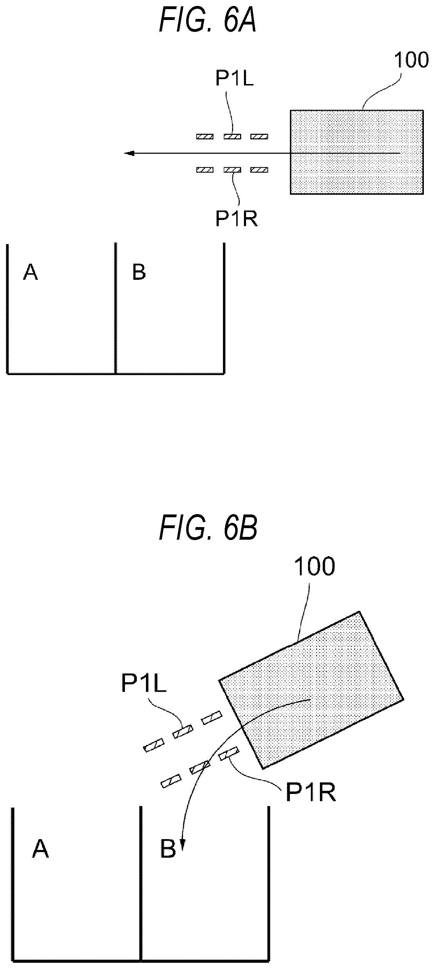

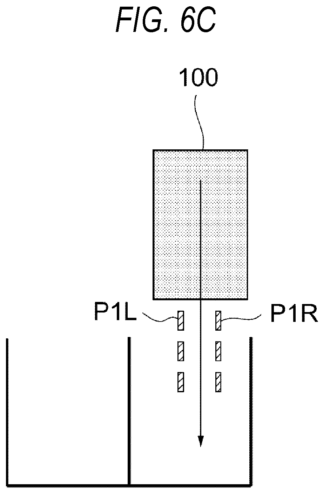

FIGS. 6A to 6C are schematic plan views each illustrating a drawing in parking operation of the vehicle 100 in the road surface drawing method for a vehicle according to the present embodiment. FIG. 6A indicates a parking operation start time, FIG. 6B indicates a time during parking operation, and FIG. 6C indicates a parking operation end time. Sections indicated by A and B in the drawings are lines indicating parking spaces in a parking lot or the like. A parking direction in the parking spaces A and B is a direction in which the up-down direction in FIGS. 6A to 6C corresponds to the front-rear direction of the vehicle, and illustrates an example in which after the vehicle 100 enters the parking spaces A and B in a lateral direction, it is parked in the parking space B while reversing. An arrow direction illustrated in FIGS. 6A to 6C schematically illustrates a steering state of the vehicle 100. FIGS. 6A to 6C illustrate an example in which the parking spaces A and B are divided by lines, but the same applies when the entire parking area is painted.

FIG. 6A illustrates a state in which the image is drawn in a normal state behind the vehicle 100 in the normal drawing step after the parking operation is started. This is a case where it is determined that the operation state is the reverse operation in the operation state acquisition step, and it is further determined that the operation state is the normal state in the reverse mode determination step. In the example illustrated in FIG. 6A, all the marks included in the drawing patterns P1L and P1R are formed by irradiation with the maximum light quantity.

FIG. 6B illustrates a state in which the image is drawn in a parking state behind the vehicle 100 in the during-parking drawing step. This is a case where it is determined that the operation state is the reverse operation in the operation state acquisition step, and it is further determined that the operation state is the parking state in the reverse mode determination step since the steering angle is equal to or greater than the predetermined angle. In the example illustrated in FIG. 6B, all the marks included in the drawing patterns P1L and P1R are formed by irradiation with less light than the maximum light quantity.

FIG. 6C illustrates a state in which the parking operation is ended and the image is drawn in the normal state behind the vehicle 100 in the normal drawing step. This is a case where it is determined that the operation state is the reverse operation in the operation state acquisition step, and it is further determined that the operation state is the normal state in the reverse mode determination step since the steering angle becomes less than a predetermined value. In the example illustrated in FIG. 6C, all the marks included in the drawing patterns P1L and P1R are formed by irradiation with the maximum light quantity.

As illustrated in FIGS. 6A to 6C, by reducing illumination light emitted from the road surface drawing unit 11 in the parking state compared to the normal state, it is possible to increase a contrast between the lines indicating the sections of the parking spaces A and B and the drawing patterns P1L and P1R, and to prevent confusion between the projected image and the marks and the lines on the road surface.

As described above, in the road surface drawing device for a vehicle 10 and the road surface drawing method for a vehicle of the present embodiment, since if it is determined that the operation state is the reverse operation, the road surface drawing unit 11 is controlled in the reverse mode, and if it is determined that the operation state is not the reverse operation, the road surface drawing unit 11 performs irradiation with less light, even if an image is projected onto an area behind the vehicle 100 during the reverse operation or the parking operation, it is possible to prevent confusion between the projected image and the marks and the lines on the road surface.

### (Second Embodiment)

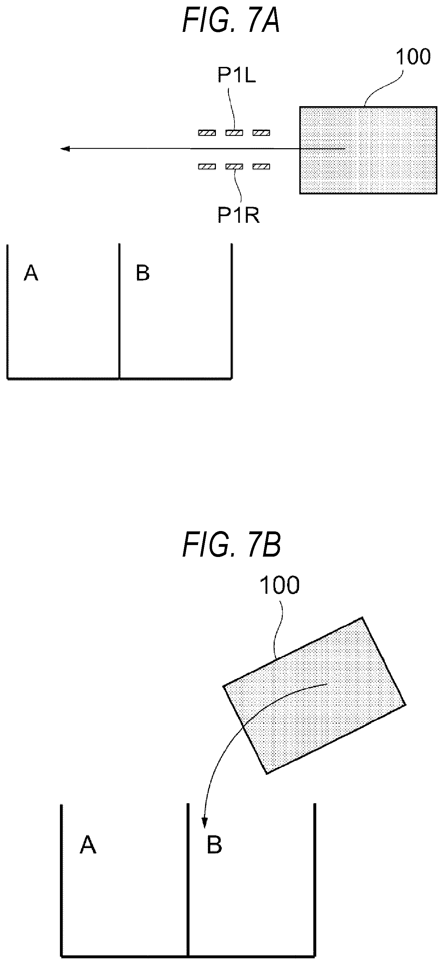

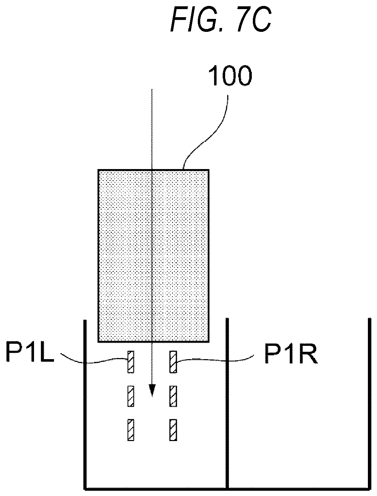

Next, a second embodiment of the present disclosure will be described with reference to FIGS. 7A to 7C. Description of contents overlapping the first embodiment will be omitted. FIGS. 7A to 7C are schematic plan views each illustrating a drawing in parking operation of the vehicle 100 in a road surface drawing method for a vehicle according to the present embodiment. FIG. 7A indicates a parking operation start time, FIG. 7B indicates a time during parking operation, and FIG. 7C indicates a parking operation end time.

FIG. 7A illustrates a state in which the image is drawn in a normal state behind the vehicle 100 in a normal drawing step after the parking operation is started. In the example illustrated in FIG. 7A, all the marks included in the drawing patterns P1L and P1R are formed by irradiation with the maximum light quantity. FIG. 7B illustrates a state in which the image is drawn in a parking state behind the vehicle 100 in the during-parking drawing step. In the example illustrated in FIG. 7B, all the marks included in the drawing patterns P1L and P1R are turned off. FIG. 7C illustrates a state in which the parking operation is ended and the image is drawn in the normal state behind the vehicle 100 in the normal drawing step. In the example illustrated in FIG. 7C, all the marks included in the drawing patterns P1L and P1R are formed by irradiation with the maximum light quantity.

In the road surface drawing device for a vehicle 10 and the road surface drawing method for a vehicle of the present embodiment, as illustrated in FIGS. 7A to 7C, by turning off all the illumination light emitted from the road surface drawing unit 11 in the parking state, the drawing patterns P1L and P1R are not drawn during the parking operation, making it possible to prevent confusion between the projected image and marks and lines on the road surface and.

### (Third Embodiment)

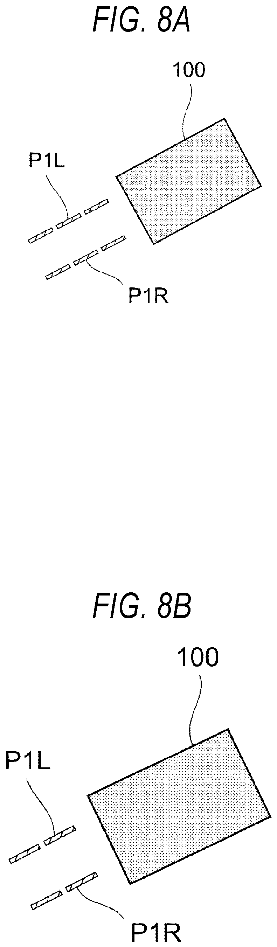

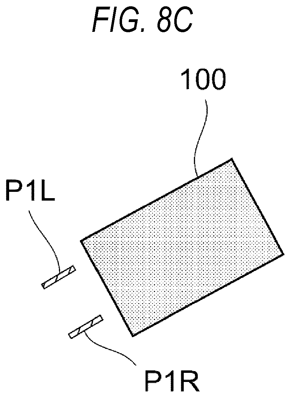

Next, a third embodiment of the present disclosure will be described with reference to FIGS. 8A to 8C. Description of contents overlapping the first embodiment will be omitted. FIGS. 8A to 8C are schematic plan views each illustrating a drawing in parking operation of the vehicle 100 in a road surface drawing method for a vehicle according to the present embodiment, in which FIG. 8A illustrates a parking operation start time, FIG. 8B illustrates a first stage in a parking state, and FIG. 8C illustrates a second stage in the parking state.

FIG. 8A illustrates a state in which the image is drawn in a normal state behind the vehicle 100 in a normal drawing step after the parking operation is started. In the example illustrated in FIG. 8A, all the marks included in the drawing patterns P1L and P1R are formed by irradiation with the maximum light quantity. FIG. 8B illustrates a state in which the image is drawn in the first stage in the parking state behind the vehicle 100 in the during-parking drawing step. In the example illustrated in FIG. 8B, among the marks included in the drawing patterns P1L and P1R, the marks M3L and M3R at positions farthest from the vehicle 100 are turned off, and the marks M1L, M1R, M2L, and M2R are formed by irradiation with the maximum light quantity. FIG. 8C illustrates a state in which the image is drawn in the second stage in the parking state behind the vehicle 100 in the during-parking drawing step. In the example illustrated in FIG. 8C, among the marks included in the drawing patterns P1L and P1R, the marks M1L and M1R at positions closest to the vehicle 100 are formed by irradiation with the maximum light quantity, and the marks M2L, M2R, M3L, and M3R are turned off.

Here, the first stage and the second stage in the parking state may be selected according to the operation state of the vehicle 100. In one example, when the steering angle is a first angle or more and less than a second angle, the drawing is performed in the first stage, and when the steering angle is the second angle or more, the drawing is performed in the second stage. Although FIGS. 8A to 8C illustrate the example in which the parking state is set to two stages, the drawing pattern P1 may be divided into three marks or more, and the number of stages may be provided according to the number of marks.

In the road surface drawing device for a vehicle 10 and the road surface drawing method for a vehicle of the present embodiment, by selecting a stage in the parking state according to the operation state of the vehicle 100, it is possible to select a drawing in the drawing patterns in which overlapping is less likely to occur in a situation in which the projected image and marks and lines on the road surface easily overlap each other. In the selection of the stage corresponding to the steering angle described above, the larger the steering angle, the larger the amount of change in a direction of travel of the vehicle 100, and there is a high possibility that marks and lines on the road surface will come into the direction of travel. Accordingly, it is possible to further prevent confusion between the projected image and the marks and lines on the road surface.

### (Fourth Embodiment)

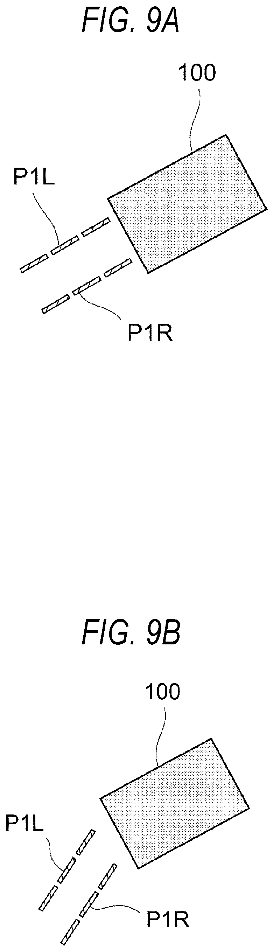

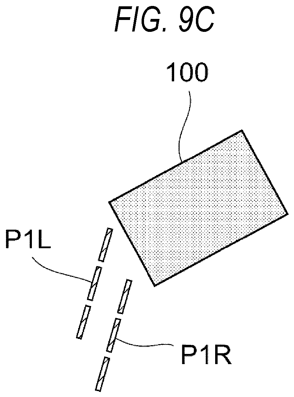

Next, a fourth embodiment of the present disclosure will be described with reference to FIGS. 9A to 9C. Description of contents overlapping the first embodiment will be omitted. FIGS. 9A to 9C are schematic plan views each illustrating a drawing in parking operation of the vehicle 100 in a road surface drawing method for a vehicle according to the present embodiment. FIG. 9A illustrates drawing in a normal state, FIG. 9B illustrates a first stage in a parking state, and FIG. 9C illustrates a second stage in the parking state.

FIG. 9A illustrates a state in which the image is drawn in the normal state behind the vehicle 100 in a normal drawing step after the parking operation is started. In the example illustrated in FIG. 9A, all the marks included in the drawing patterns P1L and P1R are formed by irradiation toward a rear center of the vehicle 100 with the maximum light quantity. FIG. 9B illustrates a state in which the image is drawn in the first stage in the parking state behind the vehicle 100 in the during-parking drawing step. In the example illustrated in FIG. 9B, the drawing patterns are inclined at a predetermined angle toward a right rear side with respect to a center line of the vehicle 100. FIG.9C illustrates a state in which the image is drawn in the second stage in the parking state behind the vehicle 100 in the during-parking drawing step. In the example illustrated in FIG. 9C, the drawing patterns are inclined at a predetermined angle larger than that in the first stage to the right rear side with respect to the center of the vehicle 100.

As illustrated in FIGS. 9B and 9C, in order to draw the drawing patterns inclined with respect to the center line of the vehicle 100, the controller 12 changes a projection direction of illumination light emitted from the road surface drawing unit 11 using the irradiation direction changing unit 13. Specifically, in a case where a swivel actuator is used as the irradiation direction changing unit 13, the controller 12 drives the swivel actuator to change a relative angle of the road surface drawing unit 11 with respect to the vehicle 100.

Here, the first stage and the second stage in the parking state may be selected according to the operation state of the vehicle 100. In one example, when the steering angle is a first angle or more and less than a second angle, the drawing is performed in the first stage, and when the steering angle is the second angle or more, the drawing is performed in the second stage. Although FIGS. 9A to 9C illustrate an example in which the parking state is set to two stages, the steering angle may be divided into three stages or more, and the drawing patterns may be formed by irradiation at a different inclination angle according to the number of ranges of the steering angle.

In the road surface drawing device for a vehicle 10 and the road surface drawing method for a vehicle of the present embodiment, by changing the projection direction of the drawing pattern according to the steering angle of the vehicle 100, the image is not drawn in areas outside the direction of travel of the vehicle 100, and it is possible to prevent overlap with marks and lines on the road surface that have little relationship to the direction of travel. Accordingly, it is possible to further prevent confusion between the projected image and the marks and the lines on the road surface.

### (Fifth Embodiment)

Next, a fifth embodiment of the present disclosure will be described. Description of contents overlapping the first embodiment will be omitted. In the first embodiment, in the operation state acquisition step, when the operation state of the vehicle changes, it is immediately determined whether the operation state is the reverse operation, and the road surface drawing step or the drawing turning-off step is determined. However, since the vehicle 100 may repeatedly travel forward and reverse in the parking operation due to switching operations, or the like, even if the operation state changes from the reverse operation to an operation state other than the reverse operation, the determination that the vehicle is in the reverse operation may be maintained for a predetermined period as a margin period. Specifically, when a transmission state changes from reverse to neutral or traveling forward, the determination of the reverse operation is continued for a predetermined period. Accordingly, when a series of operations such as reverse, traveling forward, and then reverse again is performed within the predetermined period of time, it is possible to prevent road surface drawing and the turning-off from being repeated, and to continue the road surface drawing.

### (Sixth Embodiment)

Next, a sixth embodiment of the present disclosure will be described. Description of contents overlapping the first embodiment will be omitted. In the first embodiment and the second embodiment, the drawing pattern P1 is reduced in light or turned off in the during-parking drawing step, but the drawing pattern P1 may be drawn by periodically blinking with the same light quantity as in the normal drawing step.

### (Seventh Embodiment)

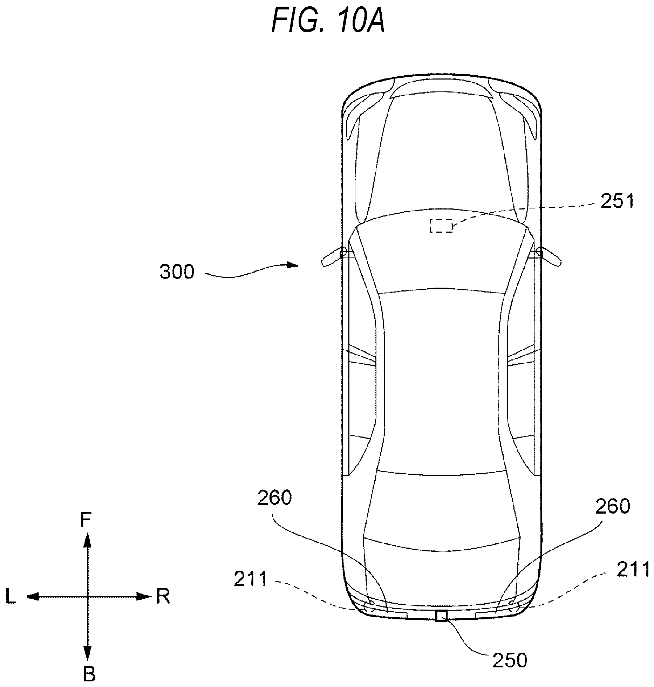

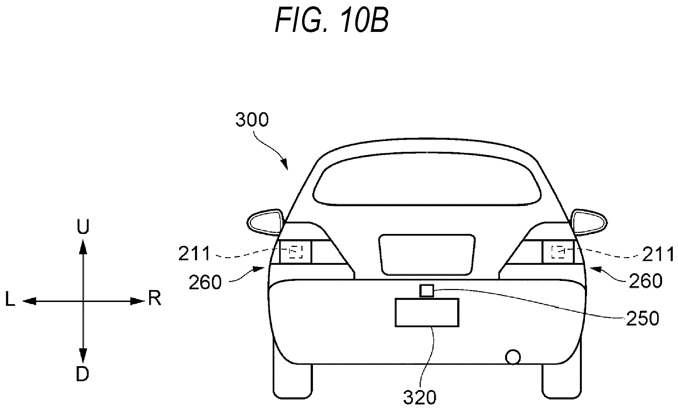

A road surface drawing device for a vehicle and a road surface drawing method for a vehicle according to a seventh embodiment will be described with reference to FIGS. 10A to 16C. FIGS. 10A and 10B illustrate an example of the arrangement of road surface drawing units 211, a camera 250, and a monitor 251, which are a part of a road surface drawing device for a vehicle 210 according to the present embodiment, in a vehicle 300.

The road surface drawing unit 211 is a unit configured to actually projects an image onto a road surface in the road surface drawing device for a vehicle 210, and includes a light source and an optical system for projection as will be described later. As illustrated in FIG. 10A, the road surface drawing unit 211 is disposed in a rear combination lamp 260. The camera 250 is an imaging device configured to capture an image of an area behind the vehicle 300. As illustrated in FIG. 10B, the camera 250 is disposed above a license plate 320 of the vehicle 300 as an example. For example, the camera 250 may be incorporated in an emblem of a vehicle. The monitor 251 is, for example, a display device of a liquid crystal screen for displaying an image captured by the camera 250. As illustrated in FIG. 10A, the monitor 251 is disposed, for example, at a position visually recognizable by a driver in the vicinity of a driver's seat. Since the driver can recognize the approach to an obstacle by directly visually recognizing the image projected onto the road surface, the monitor 251 is not an essential component in the road surface drawing device for a vehicle 210 according to the present embodiment. The road surface drawing device for a vehicle 210 further includes an ECU 213 or the like, and details of the ECU 213 or the like will be described later.

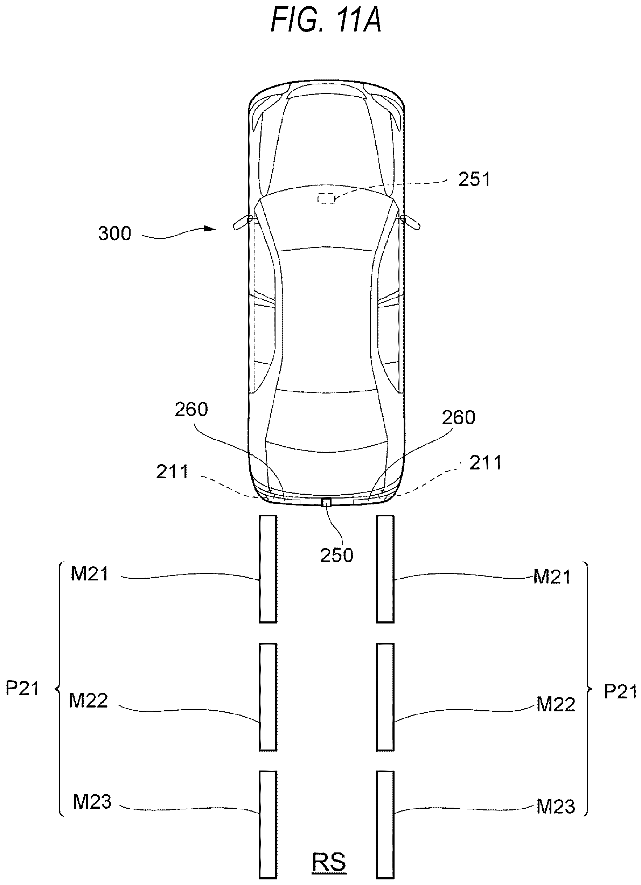

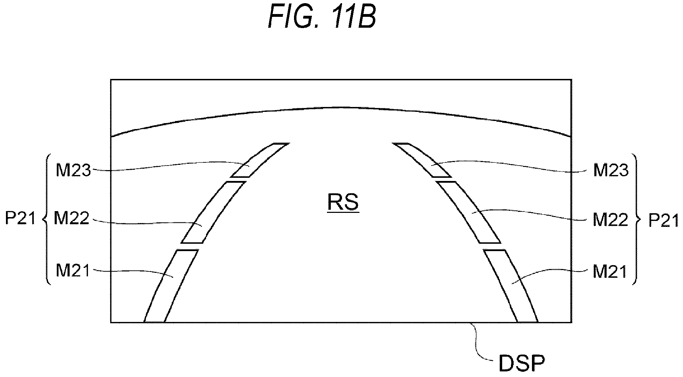

Drawing patterns that are projected onto a road surface by the road surface drawing device for a vehicle 210 according to the present embodiment will be described with reference to FIGS. 11A and 11B. As illustrated in FIG. 11A, the road surface drawing device for a vehicle 210 projects the drawing pattern P1 by the road surface drawing unit 211 onto the road surface RS behind the vehicle 300. In the present embodiment, since two road surface drawing units 211 are provided in two systems on the left and right of the vehicle 200, two drawing patterns P21 are projected. The drawing pattern P21 includes substantially rectangular marks M21, M22, and M23. As will be described later, the marks M21, M22, and M23 are formed by light sources corresponding to the respective marks. In the present embodiment, a form in which the drawing pattern P21 is formed by three marks is exemplified, but the drawing pattern P21 may be formed by two marks or less, or by four marks or more. Further, in the present embodiment, a form in which the drawing pattern P21 is formed such that a gap is provided between adjacent marks is exemplified, but the marks may be overlapped to form a single line.

FIG. 11B illustrates an example of the imaging screen DSP captured by the camera 250 and displayed on the monitor 251. As illustrated in FIG. 11B, the pair of the drawing patterns P21 projected onto the road surface RS behind the vehicle 300 is displayed on the monitor 251, and can be visually recognized by the driver.

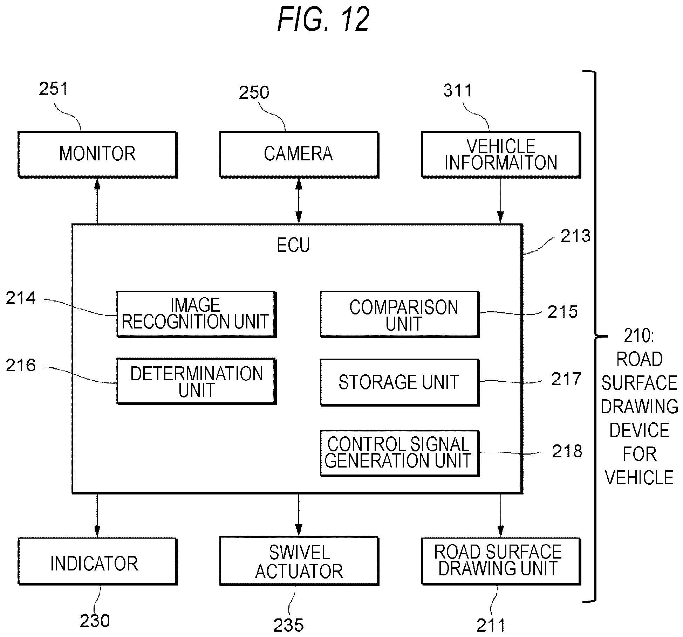

An example of the configuration of the road surface drawing device for a vehicle 210 will be described with reference to FIG. 12. As illustrated in FIG. 12, the road surface drawing device for a vehicle 210 includes the road surface drawing unit 211, the camera 250, the monitor 251, an indicator 230, a swivel actuator 235, and the electronic control unit (ECU) 213. As illustrated in FIG. 12, each of the road surface drawing unit 211, the camera 250, the monitor 251, the indicator 230, and the swivel actuator 235 is connected to the ECU 213.

Further, vehicle information 311 is input to the ECU 213. The vehicle information 311 in this embodiment is, for example, information that can be used to determine that parking is occurring, such as shift information of the vehicle 300 (parking, reverse, neutral, drive), vehicle speed or wheel speed, autonomous parking status information, and other signals that can be used to determine that parking starts. The vehicle information 311 is received by, for example, a vehicle ECU (not illustrated) that electronically controls the vehicle 300. In the present embodiment, the vehicle information 311 is used, for example, to instruct the road surface drawing device for a vehicle 210 according to the present embodiment to start drawing. For example, the road surface drawing is turned on in conjunction with a reverse signal. At least a part of the configuration illustrated in FIG. 12, for example, the camera 250, the monitor 251, and the indicator 230 may be connected to the vehicle ECU.

The indicator 230 is provided, for example, in a meter panel or on a surface of the monitor 251 as an icon indicating the drawing pattern P21. The indicator 230 is turned on or off in accordance with the turning on or turning off operation of the actual marks M1, M2, and M3. That is, the driver can confirm a lighting mode of the drawing pattern P21 projected onto the road surface RS by the indicator 230. The swivel actuator 235 is a portion configured to change a projection direction of the road surface drawing unit 211 and changes a drawing angle of the drawing pattern P21. The swivel actuator 235 is provided in the rear combination lamp 260 together with the road surface drawing unit 211.

The ECU 213 is a controller configured to control the road surface drawing unit 211, the camera 250, the monitor 251, the indicator 230, and the swivel actuator 235. The ECU 213 is, for example, a microcomputer including a CPU, a ROM, a RAM, or the like (not illustrated). The ECU 213 includes an image recognition unit 214, a comparison unit 215, a determination unit 216, a storage unit 217, and a control signal generation unit 218.

The image recognition unit 214 is configured to estimate a parking position and an object such as a person or a vehicle using an image recognition technique such as pattern matching or artificial intelligence (AI) using the image acquired from the camera 250. The ECU 213 is configured to superimpose a recognition result on the image acquired from the camera 250 and outputs a result to the monitor 251. The image recognition unit 214 according to the present embodiment is configured to receive image data captured by the camera 250, perform image processing, and extract mainly a drawing pattern included in the image, a foreign object on the road surface RS, or the like. Hereinafter, the drawing pattern extracted by the image recognition unit 214 is referred to as a "projection drawing pattern".

The storage unit 217 is a storage configured to store data of a basic drawing pattern (for example, the drawing patterns P21 illustrated in FIGS. 11A and 11B), and may be implemented by, for example, a HDD, a ROM, or the like. Hereinafter, the drawing pattern stored in the storage unit 217 is referred to as a "basic drawing pattern".

The comparison unit 215 is configured to compare the projection drawing pattern with the basic drawing pattern, and output a difference between the projection drawing pattern and the basic drawing pattern. The determination unit 216 is configured to determine whether there is a difference between the projection drawing pattern and the basic drawing pattern, based on a comparison result in the comparison unit 215. Further, the determination unit 216 is configured to identify a mark causing the difference or determines whether there is an obstacle on the road surface RS. The determination of the difference in the mark is performed by, for example, comparing a length and a width of the mark, an interval between marks, or the like.

The control signal generation unit 218 is configured to generate a control signal that controls the road surface drawing unit 211 based on the data of the drawing pattern to be projected. In the present embodiment, each of the image recognition unit 214, the comparison unit 215, the determination unit 216, and the control signal generation unit 218 is implemented by software, but is not limited thereto and may be implemented by hardware such as an ASIC.

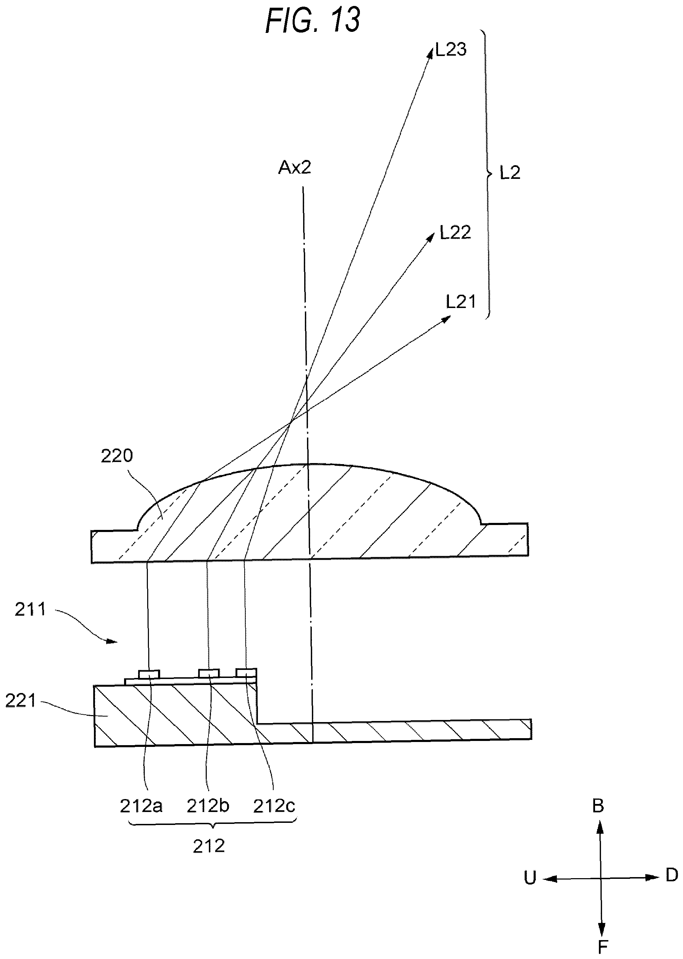

The road surface drawing unit 211 will be described in detail with reference to FIG. 13. As described above, the road surface drawing unit 211 according to the present embodiment is provided in the rear combination lamp 260. As illustrated in FIG. 13, the road surface drawing unit 211 includes light sources 212a, 212b, and 212c mounted on a substrate 221, and a projection lens 220. The light sources 212a, 212b, and 212c are disposed along a height direction (upward) of the vehicle. Hereinafter, the light sources 212a, 212b, and 212c are collectively referred to as the "light sources 212". The light sources 212 are light-emitting elements that emit light when energized, and as an example, a white LED is used as the light-emitting element. However, the present invention is not limited thereto, and a laser light-emitting element may be used as the light-emitting element. In a case where the laser light-emitting element is used as the light-emitting element, the light source 212 may be used in a form of being scanned by an actuator, or may be used in a form of being scanned using a liquid crystal, a digital micromirror device (DMD), or the like. In the present embodiment, a mode in which three light sources 212 are disposed is described as an example, but a required number of light sources 212 corresponding to the number of marks (M1 or the like) may be disposed.

The projection lens 220 is, for example, a lens in which at least one of an entrance surface and a reflection surface is aspheric, and converts light emitted from the light sources 212a, 212b, and 212c into mark light L21, L22, and L23 that project the respective marks. Since the light sources 212a, 212b, and 212c are all disposed above the optical axis Ax2, the mark light L21, L22, and L23 emitted from the projection lens 220 are emitted downward from a horizontal plane including an optical axis Ax2 and projected onto the road surface RS at a rear side. That is, the mark light L21 draws the mark M21, the mark light L22 draws the mark M22, and the mark light L23 draws the mark M23. The mark light L21, L22, and L23 are collectively referred to as the drawing light L2.

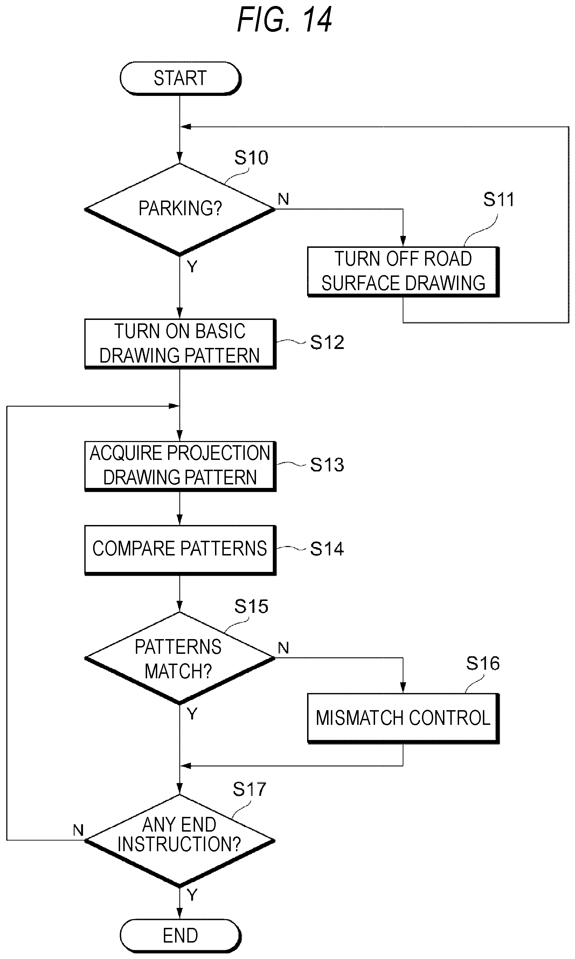

Road surface drawing processing executed by the road surface drawing device for a vehicle 210 according to the present embodiment will be described with reference to FIGS. 14 to 16C. FIG. 14 is a flowchart illustrating a flow of processing of a road surface drawing program describing the road surface drawing processing. An example of the road surface drawing program is stored in a storage means such as the ROM (not illustrated), is read by the CPU, and is loaded and executed in the RAM or the like.

In the following description, it is assumed that an instruction to start execution of the road surface drawing program has already been given to the road surface drawing device for a vehicle 210. The instruction to start execution can be, for example, a timing at which the ECU 213 receives the start of an engine of the vehicle 300. The ECU 213 continuously acquires images from the camera 250 or intermittently acquires images, sends the images to the image recognition unit 214 at an appropriate timing, and displays the images on the monitor 251.

Referring to FIG. 14, the ECU 213 waits until parking operation is performed in the vehicle 300. That is, the ECU 213 determines whether there is the parking operation, and if the determination is negative, the ECU 213 turns off the road surface drawing that is turned on in step S11, and the process returns to step S10. On the other hand, if the determination is positive, the process proceeds to step S12. The determination of whether the parking operation is performed is performed, for example, based on the vehicle information 311 input to the ECU 213 described above.

In step S12, the ECU 213 controls the road surface drawing unit 211 to turn on a basic drawing pattern.

In step S13, the ECU 213 acquires a projection drawing pattern from the image recognition unit 214.

In step S14, the comparison unit 215 compares the projection drawing pattern acquired in step S13 with the basic drawing pattern stored in the storage unit 217.

In step S15, the determination unit 216 determines whether the projection drawing pattern matches the basic drawing pattern, based on a comparison result of the comparison unit 215. This determination is made based on, for example, whether there is a difference between each of marks included in the projection drawing pattern and a mark of the basic drawing pattern corresponding to each of the marks. If the determination is negative, the process proceeds to step S16, and if the determination is positive, the process proceeds to step S17.

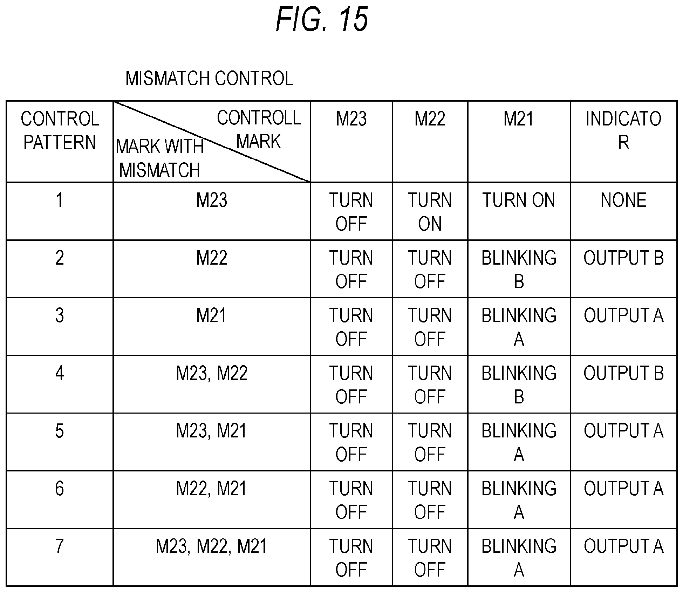

In step S16, the ECU 213 performs mismatch control. The mismatch control means changing the lighting mode of the drawing pattern according to the content of the difference when there is the difference between the projection drawing pattern and the basic drawing pattern. This processing is performed based on FIG. 15 as an example. The mismatch control illustrated in FIG. 15 is a diagram illustrating how a lighting state of each mark is changed according to which mark the difference occurs in. In the mismatch control illustrated in FIG. 15, when the mark where there is a mismatch is turned off and it comes to the last mark (the mark closest to the vehicle 300), the ECU 213 basically causes the mark to blink. When there is a mismatch in the last mark at the time of first difference detection, the ECU 213 blinks the last mark.

Referring to FIG. 15, for example, when a difference occurs between the marks M23 and M22 in a control pattern 4, the ECU 213 turns off the light source 212c corresponding to the mark M23, turns off the light source 212b corresponding to the mark M22, and blinks the light source 212a corresponding to the mark M21. In the present embodiment, two types of patterns are provided for blinking, and as an example, blinking is performed at 2 Hz in a blinking A and blinking is performed at 1 Hz in a blinking B. This indicates a grade to the degree of approach to the obstacle, and for example, indicates that the vehicle is closer to the obstacle in the blinking A than in the blinking B. In the present embodiment, a result of the mismatch control is further displayed on the indicator 230. That is, the indicator 230 also blinks in response to a blinking mode (frequency) of the drawing pattern. However, in the present embodiment, display on the indicator 230 is optional and not essential.

In step S17, the ECU 213 determines whether an instruction to end the road surface drawing program is given. If the determination is negative, the process returns to step S13, and the ECU 213 continues to acquire the projection drawing pattern. On the other hand, if the determination is positive, the ECU 213 ends the road surface drawing program. The determination of the end instruction may be made, for example, at a timing at which a driver places the vehicle 300 in a parking (P) range.

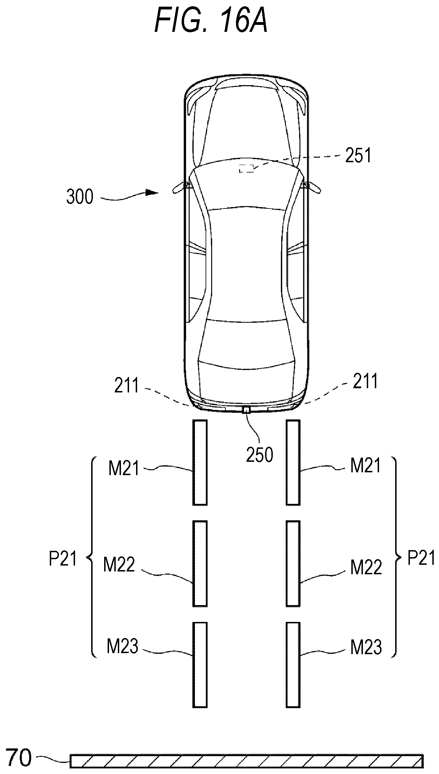

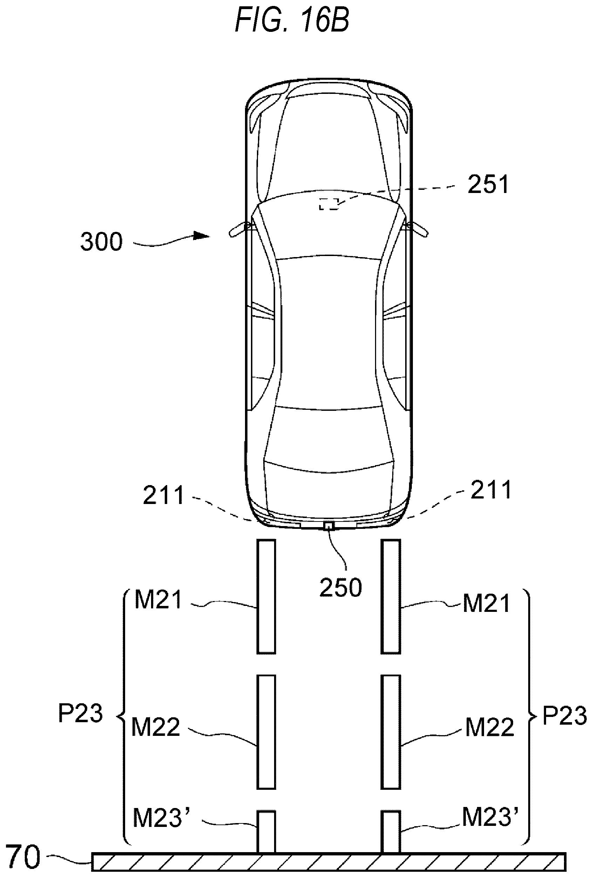

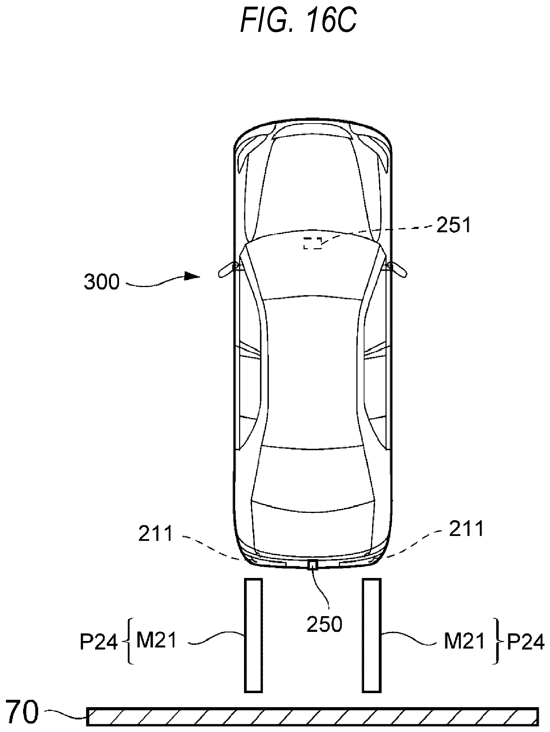

An operation of the road surface drawing program will be described in more detail with reference to FIGS. 16A to 16C. FIGS. 16A to 16C show changes in the drawing pattern on the road surface RS when the vehicle 300 is parked while reversing. FIGS. 16A to 16C illustrate a case where a wall 70 as an obstacle is present behind a parking space. FIG. 16A illustrates a state in which the complete drawing patterns P21 are projected on the road surface RS when the vehicle 300 starts to reverse. FIG. 16B illustrates a state in which the vehicle 300 reverses and drawing patterns P23 including marks M23' in which a part of the marks M23 are missing are projected onto the road surface RS. FIG. 16C illustrates a state in which the vehicle 300 further reverses and drawing patterns P24 including only the marks M21 are projected onto the road surface.

In step S10 illustrated in FIG. 14, if it is determined that the vehicle 300 is parked, the drawing patterns P21, which are the basic drawing pattern, are turned on in step S12. FIG. 16A illustrates this state. Since this state does not correspond to control patterns illustrated in FIG. 15, all the light sources 212 remain lit.

When the projection drawing pattern is acquired in step S13, the projection drawing pattern is compared with the basic drawing pattern in step S14, it is determined in step S15 that both patterns match each other. If the end instruction is not received in step S17, the process returns to step S13.

When the vehicle 300 reverses, the vehicle 300 enters the state illustrated in FIG. 16B. In FIG. 16B, the part of the mark M23 overlaps the wall 70 and is missing to form the mark M23', which constitutes the drawing pattern P23. At this time, upon receiving the pattern comparison result in step S14, a mismatch is determined in step S15. The process proceeds to step S16, and the mismatch control is performed based on FIG. 15.

In the current drawing pattern P23, since there is a difference in the mark M23, the light sources 212 are controlled according to a control pattern 1. That is, the ECU 213 turns off the light source 212c corresponding to the mark M23, turns on the light source 212b corresponding to the mark M22, and blinks the light source 212a corresponding to the mark M21 in the blinking B. Accordingly, the driver is given a warning of a first stage. Thereafter, in step S17, the process returns to step S13.

When the vehicle 300 further reverses, the vehicle 300 enters the state illustrated in FIG. 16C. In FIG. 16C, marks M22 and M23 are missing, and drawing patterns P24 including only the marks M21 are formed. Therefore, upon receiving the pattern comparison result in step S14, a mismatch is determined in step S15. The process proceeds to step S16, and the mismatch control is performed based on FIG. 15.

In the current drawing pattern P24, since there is a difference between the marks M22 and M23, the light sources 212 are controlled according to the control pattern 4. That is, the ECU 213 turns off the light source 212c corresponding to the mark M23, turns off the light source 212b corresponding to the mark M22, and blinks the light source 212a corresponding to the mark M21 in the blinking B. Accordingly, the driver is continuously given the warning of the first stage. Thereafter, in step S17, the process returns to step S13.

Although illustration is omitted, when the vehicle further reverses and the marks M21 in FIG. 16C overlaps the wall 70, since there is a difference in the marks M21, M22, and M23, the light sources 212 are controlled according to a control pattern 7. That is, the ECU 213 turns off the light source 212c corresponding to the mark M23, turns off the light source 212b corresponding to the mark M22, and blinks the light source 212a corresponding to the mark M21 in the blinking A. Accordingly, the driver is given a warning of a second stage higher in level than the first stage.

As described above, in the road surface drawing device for a vehicle and the road surface drawing method for a vehicle according to the present embodiment, even when some of the light sources 212 are turned off according to the deformation or the defect of the marks included in the drawing patterns, the approach to the obstacle is detected, and at least a part of the light sources that are lit blink. Accordingly, it possible to quickly warn the driver of the approach to the obstacle. In the road surface drawing device for a vehicle and the road surface drawing method for a vehicle according to the present embodiment, when there are a plurality of marks close to the vehicle 300, the warning level is changed according to closeness. More specifically, as illustrated in FIG. 15, when there is a match in the mark M21 and a mismatch in the mark M22, the blinking B with a lower level is allocated, and when there is a mismatch in the mark M21 which is closer to the vehicle, the blinking A with a higher level is allocated. Accordingly, it is possible to warn the driver of the approach to the obstacle in a stepped manner. In the warning, not only the blinking of the light source but also the notification of the voice to the driver via a speaker mounted on the vehicle 300 may be performed.

As described above in detail, according to the road surface drawing device for a vehicle 210 and the road surface drawing method for a vehicle according to the present embodiment, it is possible to provide the road surface drawing device for a vehicle 210 and the road surface drawing method for a vehicle capable of quickly warning the driver of the presence of an approaching obstacle in a moving process of the vehicle 300.

### (Eighth Embodiment)

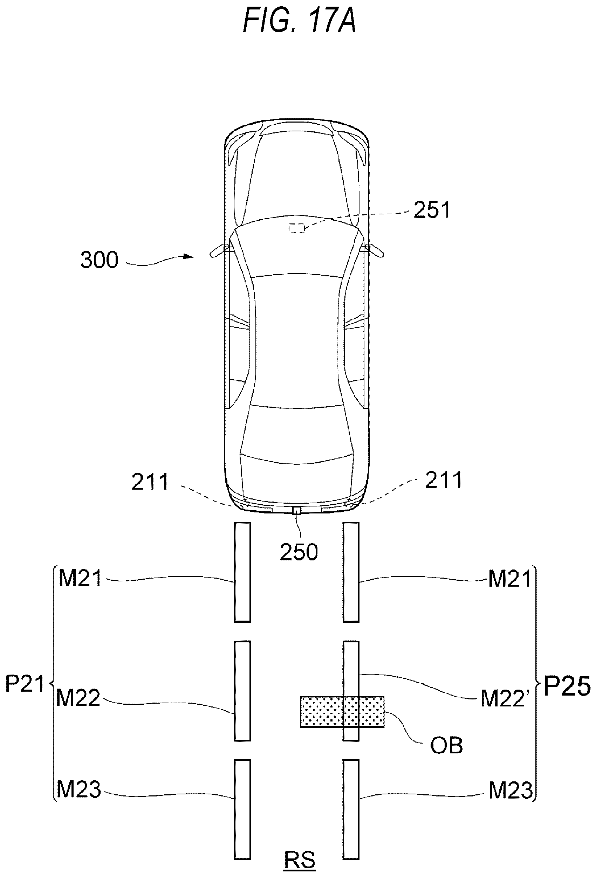

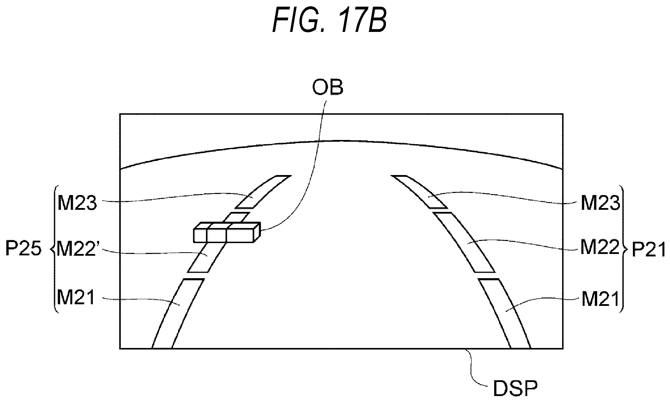

A road surface drawing device for a vehicle and a road surface drawing method for a vehicle according to the present embodiment will be described with reference to FIGS. 17A and 17B. In the above embodiments, the obstacle is the wall 70, but in the present embodiment, the obstacle is a foreign object present on the road surface RS. There is a possibility that various foreign objects such as stone and dust are present on the road surface RS. The foreign objects are divided into foreign objects that do not pose a problem for the travel of the vehicle 300, that is, foreign objects that the vehicle 300 can overcome, and foreign objects that pose a problem for the travel of the vehicle 300 and must be avoided. In the present embodiment, a foreign object that must be avoided is determined as an obstacle, and a similar mismatch control as in the above embodiments is executed on the obstacle.

FIGS. 17A and 17B illustrate a case where a foreign object OB present on the road surface RS is a curb. FIG. 17A is a top view when the foreign object OB is present behind the vehicle 300 in parking. FIG. 17B illustrates an imaging screen DSP of the monitor 51 displaying this state. As illustrated in FIGS. 17A and 17B, the foreign object OB is at a position overlapping the position of the right mark M22. Therefore, the mark M22 is deformed to a mark M22', and the drawing pattern is changed from P21 to P25. On the other hand, the left drawing pattern remains P21.

The operation of the road surface drawing processing in the state illustrated in FIGS. 17A and 17B will be described with reference to the flowchart illustrated in FIG. 14 and the mismatch control illustrated in FIG. 15.

In the comparison between the projection drawing pattern with the basic drawing pattern in step S14, when there is a difference in the mark M22, it is determined in step S15 that both patterns do not match each other, and the process proceeds to step S16. In this example, since there is a mismatch only in the mark M22, the control according to the control pattern 2 from FIG. 15 is applied. When the difference between the projection drawing pattern and the basic drawing pattern is detected, a wider range may be detected by scanning the drawing pattern rightward and leftward by the swivel actuator 235.

In the present embodiment, in step S15, it is further determined whether the foreign object OB is an obstacle. This determination is performed, for example, based on a measurement of the height of the foreign object OB by the image recognition unit 214. That is, as illustrated in FIG. 17B, when the foreign object OB is present, the mark M22' is recognized in a state of covering the foreign object OB. On the other hand, as illustrated in FIG. 10B, since the road surface drawing units 211 and the camera 250 are located at different positions in a height direction, parallax occurs between the two. Therefore, in the present embodiment, the image recognition unit 214 uses a state in which no foreign object OB is present as a reference, and measures the height of the foreign object OB based on a change in the parallax when the foreign object OB is present. When the measured height is equal to or higher than a predetermined height, it is determined that the foreign object OB is an obstacle. The predetermined height may be, for example, 5 cm to 10 cm. In the present embodiment, measurement of the height of the foreign object OB is optional, and control according to the control pattern 2 may be executed upon detection of the foreign object OB.

If it is determined in step S15 that the foreign object is not an obstacle, it is determined that the projection drawing pattern matches the basic drawing pattern, and the process proceeds to step S17. On the other hand, when it is determined that the foreign object is an obstacle, the process proceeds to step S16 with information indicating that there is the obstacle in an area of the mark together with information on the mark having the difference.

In step S16, for example, when there is a difference in the mark M22, the mismatch control of the control pattern 2 is executed. That is, the marks M23 and M22 are turned off, and the mark M21 blinks in the blinking B. Thus, the driver is given a warning of a first stage.

Although not illustrated, when the vehicle 300 further reverses, the mark M21 overlaps the foreign object OB, and since only the right mark M21 has a difference in step S14, it is determined that there is mismatch in step S15.

If it is determined in step S15 that the foreign object OB is not an obstacle, the process proceeds to step S17. On the other hand, when it is determined that the foreign object OB is an obstacle, the process proceeds to step S16, a control pattern 3 is executed with reference to FIG. 15, and the marks M21 blink in the blinking A. Thus, the driver is given the warning of the second stage.

As described above, according to the road surface drawing device for a vehicle 210 and the road surface drawing method for a vehicle according to the present embodiment, it is possible to quickly warn the driver of the approach to the obstacle. Further, it is possible to warn the driver of the approach to the obstacle in a stepped manner. In addition, according to the road surface drawing device for a vehicle 210 and the road surface drawing method for a vehicle according to the present embodiment, it is possible to increase the variety of responses, including the presence or absence of the warning, depending on a degree of hindrance to traveling posed by the foreign object OB present on the road surface RS. In the warning, not only the blinking of the light source but also the notification of the voice to the driver via a speaker mounted on the vehicle 300 may be performed.

As described above in detail, according to the road surface drawing device for a vehicle 210 and the road surface drawing method for a vehicle according to the present embodiment, it is possible to provide the road surface drawing device for a vehicle 210 and the road surface drawing method for a vehicle capable of quickly warning the driver of the presence of an approaching obstacle in the moving process of the vehicle 300.

The present disclosure is not limited to the embodiments described above, and various modifications can be made within the scope of the claims. Embodiments obtained by appropriately combining technical techniques disclosed in different embodiments are also included in the technical scope of the present disclosure.

A form in which the road surface drawing unit of the road surface drawing device for a vehicle according to the present embodiment is disposed in the rear combination lamp (including a tail/stop lamp, a reversing lamp, a turn signal lamp, or the like) of the vehicle has been described as an example. However, the present invention is not limited thereto, and the road surface drawing unit may be disposed in a headlamp (headlight) or may be disposed alone. In the following embodiments, the operation of the road surface drawing device for a vehicle when the vehicle is parked is described as an example, but the present invention is not limited thereto and may be applied to an operation when the vehicle travels forward or the like.

In the above embodiments, the first to eighth embodiments have been described separately for convenience, but it goes without saying that the above embodiments may be integrated. For example, the road surface drawing processing illustrated in FIGS. 14 and 15 can be applied to two embodiments as described above.

In addition, in the above embodiment, depending on the brightness of the light source, there is a possibility that the brightness of the drawing pattern is too high, which may dazzle the driver when parking or may cause erroneous recognition during image recognition by the image recognition unit. In such a case, the driver may adjust the brightness of the light source by viewing the monitor. Alternatively, for example, a sensor or the like that measures the luminance of an area behind the vehicle may be provided so that the luminance of the light source can be adjusted automatically.

Contents disclosed in a Japanese patent application (JP2022-125734A) filed on August 5, 2022 and a Japanese patent application (JP2022-135265A) filed on August 26, 2022 are appropriately incorporated in the present application.

## Claims

1. A road surface drawing device for a vehicle and for projecting an image based on a drawing pattern onto a road surface, the road surface drawing device comprising:
a road surface drawing unit configured to irradiate the road surface with light to project the image on the road surface;
a controller configured to control the projection of the image by the road surface drawing unit; and
an operation state acquisition unit configured to acquire an operation state of a vehicle,
wherein the controller is configured to:
control the road surface drawing unit in a reverse mode in response to determining that the operation state is reverse operation; and
turn off the road surface drawing unit in response to determining that the operation state is not the reverse operation.

2. The road surface drawing device for a vehicle according to claim 1,
wherein the controller is configured to:
acquire a steering angle included in the operation state in the reverse mode;
in a case where the steering angle is equal to or less than a predetermined angle, cause the road surface drawing unit to project the image in a normal state; and
in a case where the steering angle is larger than the predetermined angle, cause the road surface drawing unit to project the image in a parking state different from the normal state.

3. The road surface drawing device for a vehicle according to claim 2,
wherein, in the parking state, the controller is configured to cause the road surface drawing unit to project the image formed by irradiation with less light than the image formed in the normal state.

4. The road surface drawing device for a vehicle according to claim 2,
wherein, in the parking state, the controller is configured to cause the road surface drawing unit to change a projection direction of the image, according to the steering angle.

5. The road surface drawing device for a vehicle according to claim 1,
wherein the controller is configured to:
acquire transmission information included in the operation state,
in a case where the transmission information is reverse, determine that the reverse operation is performed , and
in a case where the transmission information changes from the reverse, continues the determination of the reverse operation for a predetermined period.

6. A road surface drawing method for a vehicle for projecting an image based on a drawing pattern onto a road surface, the road surface drawing method comprising:
a road surface drawing step of irradiating the road surface with light to project the image on the road surface; and
an operation state acquisition step of acquiring an operation state of a vehicle,
wherein control is performed in a reverse mode in response to determining that the operation state is reverse operation, and
the image is turned off in response to determining that the operation state is not the reverse operation.

7. A road surface drawing device for a vehicle and for projecting an image based on a drawing pattern onto a road surface, the road surface drawing device comprising:
a road surface drawing unit configured to turn on the drawing pattern;
an imaging unit configured to capture a projection drawing pattern projected onto the road surface;
a comparison unit configured to compare the projection drawing pattern with a basic drawing pattern; and
a controller configured to, in a case where there is a difference between the projection drawing pattern and the basic drawing pattern, change a lighting state of the road surface drawing unit.

8. The road surface drawing device for a vehicle according to claim 7,
wherein the road surface drawing unit includes a plurality of light sources, and
in a case where the difference between the projection drawing pattern and the basic drawing pattern is a predetermined difference, the controller blinks the light sources that are lit.

9. The road surface drawing device for a vehicle according to claim 8,
wherein the basic drawing pattern includes a plurality of marks corresponding to the plurality of light sources, and
in a case where the mark causing the difference is close to the vehicle, the controller blinks the light sources that are lit.

10. The road surface drawing device for a vehicle according to claim 9,
wherein in a case where there are the plurality of marks close to the vehicle, the controller changes a blinking mode, according to closeness to the vehicle.

11. The road surface drawing device for a vehicle according to claim 7, further comprising:
a determination unit configured to, in a case where a cause of the difference is a foreign object present on the road surface, determine whether the foreign object is an obstacle that impedes traveling of a vehicle,
wherein, in a case where the foreign object is determined to be the obstacle, the controller determines that there is the difference.

12. A road surface drawing method for a vehicle and for projecting an image based on a drawing pattern onto a road surface by a road surface drawing unit, the road surface drawing method comprising:
a road surface drawing step of turning on the drawing pattern;
an imaging step of capturing a projection drawing pattern projected onto the road surface;
a comparison step of comparing the projection drawing pattern with a basic drawing pattern; and
a lighting state changing step of changing a lighting state of the road surface drawing unit, in a case where there is a difference between the projection drawing pattern and the basic drawing pattern.
